# EUROPEAN PATENT APPLICATION

(11) **EP 4 679 899 A1**
(43) Date of publication of application: **14.01.2026**
(21) Application number: 24767366.8
(22) Date of filing: 04.03.2024
(51) Int. Cl.: H04W 48/18, H04W 60/00, H04W 76/12, H04W 76/32

(54) **NETWORK SLICE**

(30) Priority: 06.03.2023 US 202363450092 P; 30.03.2023 US 202363455569 P
(71) Applicant: LG Electronics Inc., Yeongdeungpo-gu Seoul 07336 (KR)
(72) Inventor: YOUN, Myungjune, Seoul 06772 (KR); KIM, Laeyoung, Seoul 06772 (KR)
(74) Representative: Jung, Minkyu
(86) International application number: PCT/KR2024/002732
(87) International publication number: WO 2024/186077

(57) **Abstract**

One disclosure of the present specification provides a method by which an AMF performs communication. The method may comprise the steps of: transmitting a subscription request message to an NSSF; and receiving a notification message from the NSSF.

## Description

### TECHNICAL FIELD

The present specification relates to a mobile communication.

### BACKGROUND

3rd Generation Partnership Project (3GPP) Long-Term Evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in International Telecommunication Union (ITU) and 3GPP to develop requirements and specifications for New Radio (NR) systems. 3GPP has to identify and develop the technology components needed for successfully standardizing the new RAT timely satisfying both the urgent market needs, and the more long-term requirements set forth by the ITU Radio communication sector (ITU-R) International Mobile Telecommunications (IMT)-2020 process. Further, the NR should be able to use any spectrum band ranging at least up to 130 GHz that may be made available for wireless communications even in a more distant future.

The NR targets a single technical framework addressing all usage scenarios, requirements and deployment scenarios including enhanced Mobile BroadBand (eMBB), massive Machine Type Communications (mMTC), Ultra-Reliable and Low Latency Communications (URLLC), etc. The NR shall be inherently forward compatible.

NSI (Network Slice Instance) Replacement and Network Slice Replacement are being discussed. However, in the past, there was a problem with unnecessary signaling occurring to support such replacements. In other words, there is a problem with such replacements not being performed effectively.

### DISCLOSURE

### TECHNICAL SOLUTION

In one embodiment, the method provides a method for an AMF to perform communication. The method may include: transmitting a subscription request message to an NSSF; and receiving a notification message from the NSSF.

In another embodiment, a device that implements the method is provided.

In one embodiment, a method is provided for a UE to perform communication. The method may include: transmitting a NAS message including a PDU session establishment request message and a first S-NSSAI to an AMF; receiving a PDU session establishment acceptance message; and receiving a PDU session release command message.

In another embodiment, a device for implementing the method is provided.

In one embodiment, a method is provided for the NSSF to perform communication. The method may include: receiving a subscription request message from the AMF; and transmitting a notification message to the AMF.

In another embodiment, a device that implements the method is provided.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of UE to which implementations of the present disclosure is applied.
FIG. 4 shows an example of 5G system architecture to which implementations of the present disclosure is applied.
FIGS. 5 and 6 show an example of a PDU session establishment procedure to which implementations of the present disclosure is applied.
FIG. 7 is an example of a procedure related to network slice replacement according to an embodiment of the present disclosure.
FIG. 8 is an example of a procedure related to network slice instance replacement according to an embodiment of the present disclosure.
FIG. 9 is an example of a procedure performed according to an embodiment of the present disclosure.

### MODE FOR INVENTION

The following techniques, apparatuses, and systems may be applied to a variety of wireless multiple access systems. Examples of the multiple access systems include a Code Division Multiple Access (CDMA) system, a Frequency Division Multiple Access (FDMA) system, a Time Division Multiple Access (TDMA) system, an Orthogonal Frequency Division Multiple Access (OFDMA) system, a Single Carrier Frequency Division Multiple Access (SC-FDMA) system, and a Multi Carrier Frequency Division Multiple Access (MC-FDMA) system. CDMA may be embodied through radio technology such as Universal Terrestrial Radio Access (UTRA) or CDMA2000. TDMA may be embodied through radio technology such as Global System for Mobile communications (GSM), General Packet Radio Service (GPRS), or Enhanced Data rates for GSM Evolution (EDGE). OFDMA may be embodied through radio technology such as Institute of Electrical and Electronics Engineers (IEEE) 802.11 (Wi-Fi), IEEE 802.16 (WiMAX), IEEE 802.20, or Evolved UTRA (E-UTRA). UTRA is a part of a Universal Mobile Telecommunications System (UMTS). 3rd Generation Partnership Project (3GPP) Long-Term Evolution (LTE) is a part of Evolved UMTS (E-UMTS) using E-UTRA. 3GPP LTE employs OFDMA in downlink (DL) and SC-FDMA in uplink (UL). Evolution of 3GPP LTE includes LTE-Advanced (LTE-A), LTE-A Pro, and/or 5G New Radio (NR).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

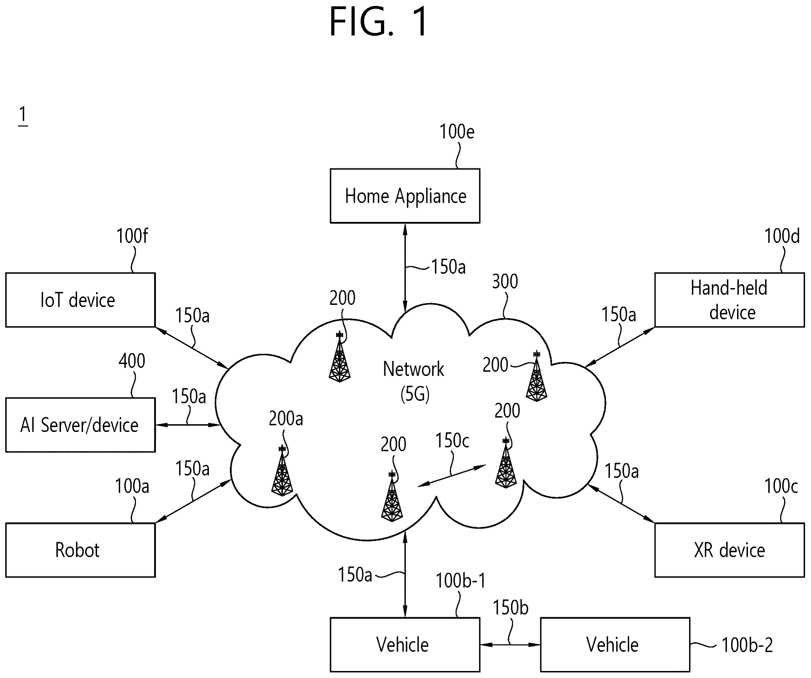

FIG. 1 shows an example of a communication system to which implementations of the present disclosure is applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced Mobile BroadBand (eMBB), (2) a category of massive Machine Type Communication (mMTC), and (3) a category of Ultra-Reliable and Low Latency Communications (URLLC).

Referring to FIG. 1, the communication system 1 includes wireless devices 100a to 100f, Base Stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using Radio Access Technology (RAT) (e.g., 5G NR or LTE) and may be referred to as communication/radio/5G devices. The wireless devices 100a to 100f may include, without being limited to, a robot 100a, vehicles 100b-1 and 100b-2, an eXtended Reality (XR) device 100c, a hand-held device 100d, a home appliance 100e, an Internet-of-Things (IoT) device 100f, and an Artificial Intelligence (AI) device/server 400. For example, the vehicles may include a vehicle having a wireless communication function, an autonomous driving vehicle, and a vehicle capable of performing communication between vehicles. The vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called User Equipments (UEs). A UE may include, for example, a cellular phone, a smartphone, a laptop computer, a digital broadcast terminal, a Personal Digital Assistant (PDA), a Portable Multimedia Player (PMP), a navigation system, a slate Personal Computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or Device-to-Device (D2D) communication) 150b, inter-base station communication 150c (e.g., relay, Integrated Access and Backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

NR supports multiples numerologies (and/or multiple Sub-Carrier Spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., Frequency Range 1 (FR1) and Frequency Range 2 (FR2). The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter Wave (mmW).

**[Table 1]**

| Frequency Range designation | Corresponding frequency range | Subcarrier Spacing |
|---|---|---|
| FR1 | 450MHz - 6000MHz | 15*,* 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15*,* 30, 60kHz |
| FR2 | 24250MHz - 52600MHz | 60, 120, 240kHz |

Here, the radio communication technologies implemented in the wireless devices in the present disclosure may include NarrowBand IoT (NB-IoT) technology for low-power communication as well as LTE, NR and 6G. For example, NB-IoT technology may be an example of Low Power Wide Area Network (LPWAN) technology, may be implemented in specifications such as LTE Cat NB1 and/or LTE Cat NB2, and may not be limited to the-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced MTC (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the-mentioned names. Additionally and/or alternatively, the radio communication technologies implemented in the wireless devices in the present disclosure may include at least one of ZigBee, Bluetooth, and/or LPWAN which take into account low-power communication, and may not be limited to the-mentioned names. For example, ZigBee technology may generate Personal Area Networks (PANs) associated with small/low-power digital communication based on various specifications such as IEEE 802.15.4 and may be called various names.

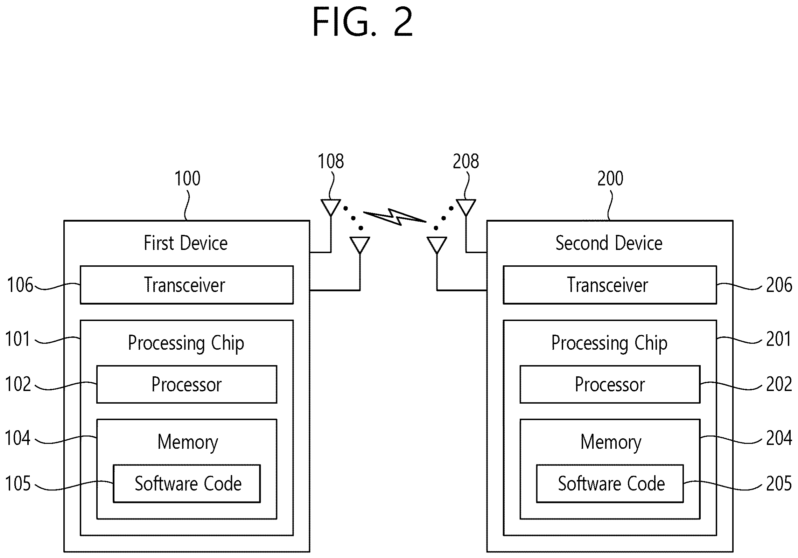

FIG. 2 shows an example of wireless devices to which implementations of the present disclosure is applied.

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor. The one or more memories 104 and 204 may be connected to the one or more processors 102 and 202 and store various types of data, signals, messages, information, programs, code, instructions, and/or commands. The one or more memories 104 and 204 may be configured by Random Access Memory (RAM), Dynamic RAM (DRAM), Read-Only Memory (ROM), electrically Erasable Programmable Read-Only Memory (EPROM), flash memory, volatile memory, non-volatile memory, hard drive, register, cash memory, computer-readable storage medium, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208. Additionally and/or alternatively, the one or more transceivers 106 and 206 may include one or more antennas 108 and 208. The one or more transceivers 106 and 206 may be adapted to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and downconvert the OFDM signals into OFDM baseband signals by their (analog) oscillators and/or filters under the control of the one or more processors 102 and 202.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in Uplink (UL) and as a receiving device in Downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

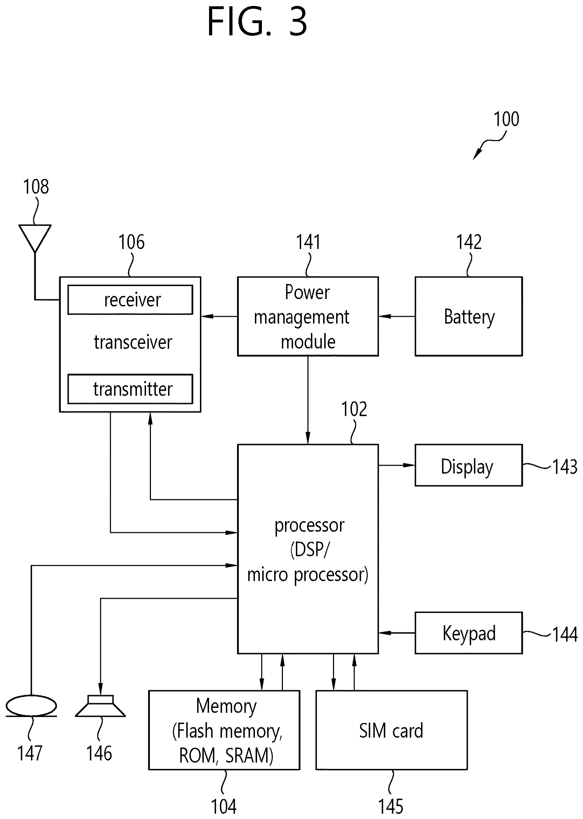

FIG. 3 shows an example of UE to which implementations of the present disclosure is applied.

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information related to many SIM cards.

The speaker 146 outputs sound-related results processed by the processor 102. The microphone 147 receives sound-related inputs to be used by the processor 102.

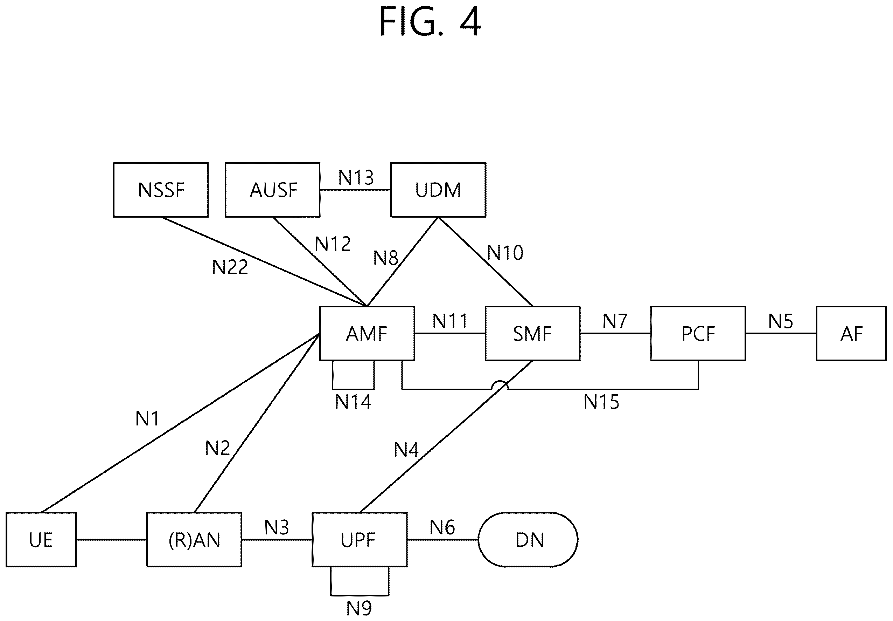

FIG. 4 shows an example of 5G system architecture to which implementations of the present disclosure is applied.

The 5G system (5GS) architecture consists of the following network functions (NF).
- Authentication Server Function (AUSF)
- Access and Mobility Management Function (AMF)
- Data Network (DN), e.g., operator services, Internet access or 3rd party services
- Unstructured Data Storage Function (UDSF)
- Network Exposure Function (NEF)
- Intermediate NEF (I-NEF)
- Network Repository Function (NRF)
- Network Slice Selection Function (NSSF)
- Policy Control Function (PCF)
- Session Management Function (SMF)
- Unified Data Management (UDM)
- Unified Data Repository (UDR)
- User Plane Function (UPF)
- UE radio Capability Management Function (UCMF)
- Application Function (AF)
- User Equipment (UE)
- (Radio) Access Network ((R)AN)
- 5G-Equipment Identity Register (SG-EIR)
- Network Data Analytics Function (NWDAF)
- CHarging Function (CHF)

Furthermore, the following network functions may be considered.
- Non-3GPP InterWorking Function (N3IWF)
- Trusted Non-3GPP Gateway Function (TNGF)
- Wireline Access Gateway Function (W-AGF)

FIG. 4 depicts the 5G system architecture in the non-roaming case, using the reference point representation showing how various network functions interact with each other.

In FIG. 4, for the sake of clarity of the point-to-point diagrams, the UDSF, NEF and NRF have not been depicted. However, all depicted Network Functions can interact with the UDSF, UDR, NEF and NRF as necessary.

For clarity, the UDR and its connections with other NFs, e.g., PCF, are not depicted in FIG. 4. For clarity, the NWDAF and its connections with other NFs, e.g., PCF, are not depicted in FIG. 4.

The 5G system architecture includes the following reference points:
- N1: Reference point between the UE and the AMF.
- N2: Reference point between the (R)AN and the AMF.
- N3: Reference point between the (R)AN and the UPF.
- N4: Reference point between the SMF and the UPF.
- N6: Reference point between the UPF and a Data Network.
- N9: Reference point between two UPFs.

The following reference points show the interactions that exist between the NF services in the NFs.
- N5: Reference point between the PCF and an AF.
- N7: Reference point between the SMF and the PCF.
- N8: Reference point between the UDM and the AMF.
- N10: Reference point between the UDM and the SMF.
- N11: Reference point between the AMF and the SMF.
- N12: Reference point between the AMF and the AUSF.
- N13: Reference point between the UDM and the AUSF.
- N14: Reference point between two AMFs.
- N15: Reference point between the PCF and the AMF in the case of non-roaming scenario, PCF in the visited network and AMF in the case of roaming scenario.
- N16: Reference point between two SMFs, (in roaming case between SMF in the visited network and the SMF in the home network).
- N22: Reference point between the AMF and the NSSF.

In some cases, a couple of NFs may need to be associated with each other to serve a UE.

PDU session establishment procedure is described. Section 4.3.2 of 3GPP TS 23.502 V16.3.0 (2019-12) can be referenced.

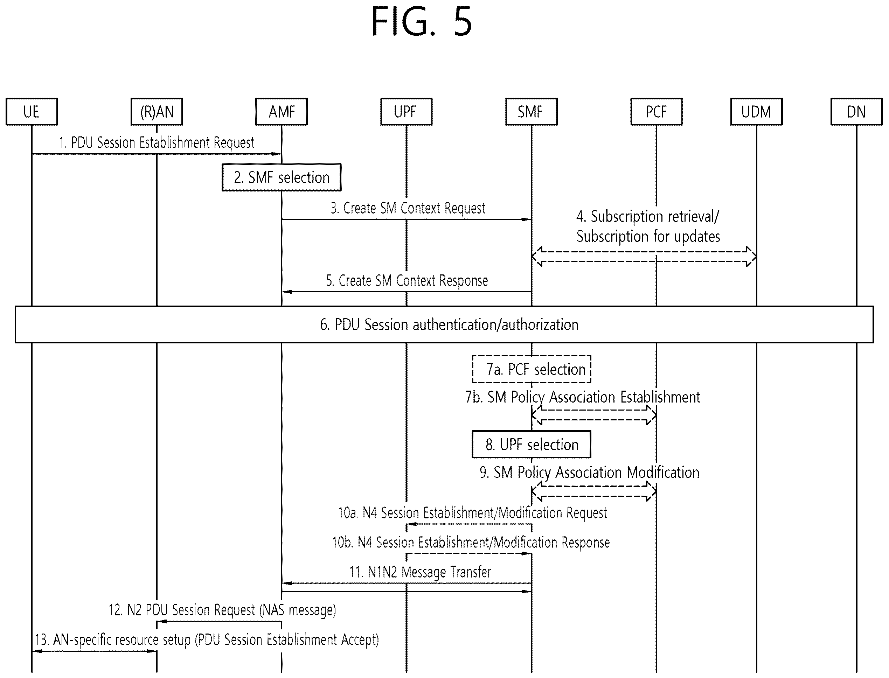

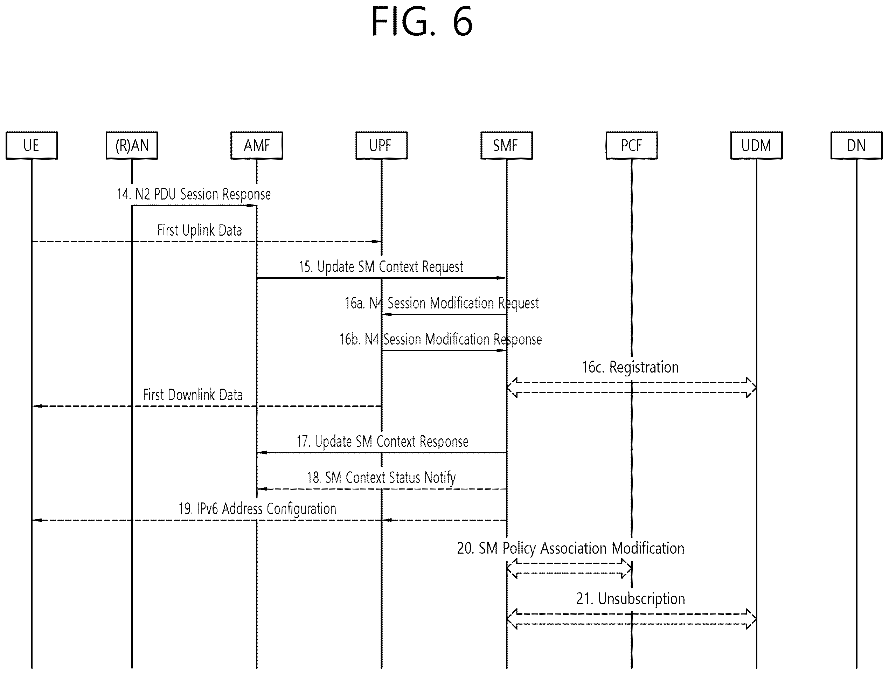

**FIGS. 5** **and** **6** **show an example of a PDU session establishment procedure to which implementations of the present disclosure is applied.**

A PDU session establishment may correspond to:
- a UE initiated PDU session establishment procedure.
- a UE initiated PDU session handover between 3GPP and non-3GPP.
- a UE initiated PDU session handover from EPS to 5GS.
- a network triggered PDU session establishment procedure.

A PDU session may be associated either (a) with a single access type at a given time, i.e., either 3GPP access or non-3GPP access, or (b) simultaneously with multiple access types, i.e., one 3GPP access and one non-3GPP access. A PDU session associated with multiple access types is referred to as multi access PDU (MA PDU) session and it may be requested by access traffic steering, switching, splitting (ATSSS)-capable UEs.

FIGS. 5 and 6 specify the procedures for establishing PDU sessions associated with a single access type at a given time.

The procedure shown in FIGS. 5 and 6 assumes that the UE has already registered on the AMF thus unless the UE is emergency registered the AMF has already retrieved the user subscription data from the UDM.

First, procedures of FIG. 5 are described.
(1) Step 1: In order to establish a new PDU session, the UE generates a new PDU session ID.

The UE initiates the UE requested PDU session establishment procedure by the transmission of a NAS message including a PDU Session Establishment Request message within the N1 SM container. The PDU Session Establishment Request message includes a PDU session ID, Requested PDU Session Type, a Requested session and service continuity (SSC) mode, 5GSM Capability, protocol configuration options (PCO), SM PDU DN Request Container, UE Integrity Protection Maximum Data Rate, etc.

The Request Type indicates "Initial request" if the PDU session establishment is a request to establish a new PDU session and indicates "Existing PDU Session" if the request refers to an existing PDU session switching between 3GPP access and non-3GPP access or to a PDU session handover from an existing packet data network (PDN) connection in EPC. The Request Type indicates "Emergency Request" if the PDU session establishment is a request to establish a PDU session for emergency services. The Request Type indicates "Existing Emergency PDU Session" if the request refers to an existing PDU session for emergency services switching between 3GPP access and non-3GPP access or to a PDU session handover from an existing PDN connection for emergency services in EPC.

The UE includes the S-NSSAI from the Allowed NSSAI of the current access type. If the Mapping of Allowed NSSAI was provided to the UE, the UE shall provide both the S-NSSAI of the visited PLMN (VPLMN) from the Allowed NSSAI and the corresponding S-NSSAI of the HPLMN from the Mapping Of Allowed NSSAI.

(2) Step 2: The AMF selects an SMF. If the Request Type indicates "Initial request" or the request is due to handover from EPS or from non-3GPP access serving by a different AMF, the AMF stores an association of the S-NSSAI(s), the data network name (DNN), the PDU session ID, the SMF ID as well as the Access Type of the PDU session.

If the Request Type is "initial request" and if the Old PDU session ID indicating the existing PDU session is also included in the message, the AMF selects an SMF and stores an association of the new PDU Session ID, the S-NSSAI(s), the selected SMF ID as well as Access Type of the PDU Session.

If the Request Type indicates "Existing PDU Session", the AMF selects the SMF based on SMF-ID received from UDM. The AMF updates the Access Type stored for the PDU session.

If the Request Type indicates "Existing PDU Session" referring to an existing PDU session moved between 3GPP access and non-3GPP access, then if the serving PLMN S-NSSAI of the PDU session is present in the Allowed NSSAI of the target access type, the PDU session establishment procedure can be performed in the following cases:
- the SMF ID corresponding to the PDU session ID and the AMF belong to the same PLMN;
- the SMF ID corresponding to the PDU session ID belongs to the HPLMN;

Otherwise the AMF shall reject the PDU session establishment request with an appropriate reject cause.

The AMF shall reject a request coming from an emergency registered UE and the Request Type indicates neither "Emergency Request" nor "Existing Emergency PDU Session".

(3) Step 3: If the AMF does not have an association with an SMF for the PDU session ID provided by the UE (e.g., when Request Type indicates "initial request"), the AMF invokes Create SM Context Request procedure (e.g., Nsmf_PDUSession_CreateSMContext Request). If the AMF already has an association with an SMF for the PDU session ID provided by the UE (e.g., when Request Type indicates "existing PDU Session"), the AMF invokes Update SM Context Request procedure (e.g., Nsmf_PDUSession_UpdateSMContext Request).

The AMF sends the S-NSSAI of the serving PLMN from the Allowed NSSAI to the SMF. For roaming scenario in local breakout (LBO), the AMF also sends the corresponding S-NSSAI of the HPLMN from the Mapping Of Allowed NSSAI to the SMF.

The AMF ID is the UE's GUAMI which uniquely identifies the AMF serving the UE. The AMF forwards the PDU session ID together with the N1 SM container including the PDU Session Establishment Request message received from the UE. The generic public subscription identifier (GPSI) shall be included if available at AMF.

The AMF provides the PEI instead of the SUPI when the UE in limited service state has registered for emergency services without providing a SUPI. In case the UE in limited service state has registered for Emergency services with a SUPI but has not been authenticated, the AMF indicates that the SUPI has not been authenticated. The SMF determines that the UE has not been authenticated when it does not receive a SUPI for the UE or when the AMF indicates that the SUPI has not been authenticated.

The AMF may include a PCF ID in the Nsmf_PDUSession_CreateSMContext Request. This PCF ID identifies the home PCF (H-PCF) in the non-roaming case and the visited PCF (V-PCF) in the LBO roaming case.

(4) Step 4: If session management subscription data for corresponding SUPI, DNN and S-NSSAI of the HPLMN is not available, then SMF may retrieve the session management subscription data from the UDM and subscribes to be notified when this subscription data is modified.

(5) Step 5: The SMF transmits either Create SM Context Response message (e.g., Nsmf_PDUSession_CreateSMContext Response) or Update SM Context Response message (e.g., Nsmf_PDUSession_UpdateSMContext Response) to the AMF, depending on the request received in step 3.

If the SMF received Nsmf_PDUSession_CreateSMContext Request in step 3 and the SMF is able to process the PDU session establishment request, the SMF creates an SM context and responds to the AMF by providing an SM Context ID.

When the SMF decides to not accept to establish a PDU session, the SMF rejects the UE request via NAS SM signaling including a relevant SM rejection cause by responding to the AMF with Nsmf_PDUSession_CreateSMContext Response. The SMF also indicates to the AMF that the PDU session ID is to be considered as released, the SMF proceeds to step 20 below and the PDU session establishment procedure is stopped.

(6) Step 6: Optional secondary authentication/authorization may be performed.

(7a) Step 7a: If dynamic policy and charging control (PCC) is to be used for the PDU session, the SMF may perform PCF selection.

(7b) Step 7b: The SMF may perform an SM Policy Association Establishment procedure to establish an SM Policy association with the PCF and get the default PCC rules for the PDU session.

(8) Step 8: The SMF selects one or more UPFs.

(9) Step 9: The SMF may perform an SMF initiated SM Policy Association Modification procedure to provide information related to the policy control request trigger condition(s) that have been met.

(10) Step 10: If Request Type indicates "initial request", the SMF may initiate an N4 Session Establishment procedure with the selected UPF. Otherwise, the SMF may initiate an N4 Session Modification procedure with the selected UPF

In step 10a, the SMF may send an N4 Session Establishment/Modification Request to the UPF and provides packet detection, enforcement and reporting rules to be installed on the UPF for this PDU session. In step 10b, the UPF may acknowledge by sending an N4 Session Establishment/Modification Response.

(11) Step 11: The SMF transmits a N1N2Message Transfer message (e.g., Namf_Communication_N1N2MessageTransfer) to the AMF.

The N1N2Message Transfer message may include N2 SM information. The N2 SM information carries information that the AMF shall forward to the (R)AN which may include:
- The CN Tunnel Info: Core network address(es) of the N3 tunnel corresponding to the PDU session;
- One or multiple quality of service (QoS) profiles and the corresponding QoS flow IDs (QFIs);
- The PDU session ID: indicate to the UE the association between (R)AN resources and a PDU session for the UE.
- S-NSSAI with the value for the serving PLMN (i.e., the HPLMN S-NSSAI or, in LBO roaming case, the VPLMN S-NSSAI).
- User Plane Security Enforcement information determined by the SMF.
- If the User Plane Security Enforcement information indicates that integrity protection is "Preferred" or "Required(or Mandatory)", the SMF also includes the UE Integrity Protection Maximum Data Rate as received in the PDU Session Establishment Request message.
- Redundancy sequence number (RSN) parameter

The N1N2Message Transfer message may include N1 SM container. The N1 SM container includes the PDU Session Establishment Accept message that the AMF shall provide to the UE. The PDU Session Establishment Accept message includes S-NSSAI from the Allowed NSSAI. For LBO roaming scenario, the PDU Session Establishment Accept message includes the S-NSSAI from the Allowed NSSAI for the VPLMN and also it includes the corresponding S-NSSAI of the HPLMN from the Mapping Of Allowed NSSAI that SMF received in step 3.

Multiple QoS Rules, QoS flow level, QoS parameters if needed for the QoS Flow(s) associated with those QoS rule(s) and QoS Profiles may be included in the PDU Session Establishment Accept message within the N1 SM container and in the N2 SM information.

If the PDU session establishment failed anywhere between step 5 and step 11, then the N1N2Message Transfer message shall include the N1 SM container with a PDU Session Establishment Reject message and shall not include any N2 SM information. The (R)AN sends the NAS message including the PDU Session Establishment Reject message to the UE. In this case, steps 12-17 are skipped.

(12) Step 12: The AMF sends the NAS message including PDU Session ID and PDU Session Establishment Accept message targeted to the UE and the N2 SM information received from the SMF within the N2 PDU Session Request message to the (R)AN.

(13) Step 13: The (R)AN may issue AN specific signaling exchange with the UE that is related with the information received from SMF. For example, in case of a NG-RAN, an RRC connection reconfiguration may take place with the UE establishing the necessary NG-RAN resources related to the QoS rules for the PDU session request received in step 12.

The (R)AN forwards the NAS message (PDU Session ID, N1 SM container (PDU Session Establishment Accept message)) provided in step 12 to the UE. The (R)AN shall only provide the NAS message to the UE if the AN specific signaling exchange with the UE includes the (R)AN resource additions associated to the received N2 command.

If the N2 SM information is not included in the step 11, then the following steps 14 to 16b and step 17 are omitted.

Now, procedures of FIG. 6, which follow the procedures of FIG. 5, are described.

(14) Step 14: The (R)AN transmits a N2 PDU Session Response message to the AMF. The N2 PDU Session Response message may include PDU session ID, Cause, N2 SM information (PDU Session ID, AN Tunnel Info, List of accepted/rejected QFI(s), User Plane Enforcement Policy Notification)), etc.

(15) Step 15: The AMF transmits an Update SM Context Request message (e.g., Nsmf_PDUSession _UpdateSMContext Request) to the SMF. The AMF forwards the N2 SM information received from (R)AN to the SMF.

(16a) Step S16a: The SMF initiates an N4 Session Modification procedure with the UPF. The SMF provides AN Tunnel Info to the UPF as well as the corresponding forwarding rules.

(16b) Step S16b: The UPF provides an N4 Session Modification Response to the SMF.

After this step, the UPF may deliver any DL packets to the UE that may have been buffered for this PDU session.

(16c) Step 16c: If the SMF has not yet registered for this PDU session, then the SMF may register with the UDM for a given PDU Session.

(17) Step 17: The SMF transmits an Update SM Context Response message (e.g., Nsmf_PDUSession _UpdateSMContext Response) to the AMF.

After this step, the AMF forwards relevant events subscribed by the SMF.

(18) Step 18: If during the procedure, any time after step 5, the PDU session establishment is not successful, the SMF may inform the AMF by invoking Nsmf_PDUSession_SMContextStatusNotify (Release). The SMF may also release any N4 session(s) created, any PDU session address if allocated (e.g., IP address) and release the association with PCF, if any. In this case, step 19 is skipped.

(19) Step 19: In the case of PDU Session Type IPv6 or IPv4v6, the SMF may generate an IPv6 Router Advertisement and send it to the UE.

(20) Step 20: The SMF may perform SMF initiated SM Policy Association Modification.

(21) Step 21: If the PDU Session establishment failed after step 4, the SMF may unsubscribe to the modifications of session management subscription data, if the SMF is no more handling a PDU session of the UE.

Scenarios and candidate solutions were discussed to support the continuity of slice services when UE mobility-related operations are being performed due to network slice not being supported or resource limitations of network slices on the target RAN node. It was confirmed that the discussed scenarios are valid because network slices do not need to be available at all TAs of the PLMN.

There is a scenario where the S-NSSAI of the requested NSSAI is rejected because it is not supported in the Tracking Area (TA), but may be supported in a neighboring TA. The AMF may need to include neighboring TAs in the Registration Area (RA) for the S-NSSAI of the accepted NSSAI. If this operation is performed and the rejection cause code is "Not supported in RA," the UE cannot attempt to register to the rejected S-NSSAI until the UE leaves the RA. If this is not desirable, the AMF may only assign a RA that is limited to the current TA and the TA that does not support the rejected S-NSSAI. In this case, when the UE moves to a adjacent TA that supports the rejected S-NSSAI, the UE may register to the rejected S-NSSAI. A solution for improving network slices that are requested by the UE but are not available at the TA but are available at other TAs in the RA may be discussed. For example, it may be improved so that the UE can request network slices without the AMF forcibly reducing the size of the RA.

The following requirements were discussed. There may be services/applications that are not provided by the service network but require network slices available on other networks in the area. For roaming UE that activates such services/applications, the HPLMN may be able to provide the UE with priority information of the VPLMN where the UE may register network slices.

In the relevant area, a roaming UE may activate services/applications requiring a network slice not provided by the service network but available from other networks. In this case, the HPLMN shall be able to provide the UE with priority information of the VPLMNs in which the UE may register for network slices.

When the UE performs registration, the UE generates a Requested NSSAI based on the Configured S-NSSAI and Allowed NSSAI, and may also consider the URSP rules.

The UE may register S-NSSAI that will not be used while registered in this RA at one time(e.g., by executing an application to configure a PDU session in the network slice), or may not register it.

Similarly, even after the application has been terminated, other applications of the UE may not use the PDU session (e.g., to deliver traffic from running applications via the PDU session). This may be perceived as a problem by the operator's customers, e.g., when NSAC is deployed, additional UEs may fail to register with this S-NSSAI, and the UE may request an S-NSSAI for the PDU session.

Another issue is that operators may have SLAs with customers related to customer service availability. If a network slice is congested and another network slice can provide the SLA better, the network may determine that the UE traffic flow is better served on the other slice.

System improvements, including UE registration and PDU session establishment, may be discussed to ensure network control operations for network slice usage (e.g., when NSAC is performed, network slices may provide services to UE/PDU sessions that are actually active).

Services provided through specific network slices may be limited in terms of service area (not matching the deployed TA boundaries) and/or deployment time range (e.g., services provided in response to specific events). Mechanisms may be defined to support deployment more optimally to enable such scenarios, with particular focus on network slice termination and minimizing operational and service disruptions.

NSACF is defined to perform network slice admission control (NSAC). Multiple NSACFs may be connected to a single network slice. Currently, operators must divide the maximum number of PDU sessions or UEs allowed on a network slice among each NSACF. This is because there is no defined mechanism for dynamically sharing the maximum allowable number among all NSACFs connected to a single network slice.

In order to provide service continuity, the following scenarios may be investigated to determine whether and how they can be resolved. For example, scenarios may include cases where existing network slices or network slice instances are unable to provide services to PDU sessions, or cases where existing network slice instances are unable to meet the performance requirements of applications. The adequacy of existing network slices or network slice instances may be investigated. If deemed valuable, minimal system optimization may also be considered.

Although S-NSSAI is rejected in the first TA of the RA, whether and how to initiate registration for rejected S-NSSAI that may be possible in other TAs of the RA may be studied.

Support for EASNS requirements related to roaming specified in Section 6.1.2.1 of TS 22.261 V18.8.0 may be discussed. For example, support for enabling the UE to select and acquire information related to the availability of VPLMNs that support network slices that may be used by the UE in a roaming scenario may be discussed.

Whether and how to improve the system to ensure network control operations for network slice usage may be studied (e.g., so that network slices can provide services to UE/PDU sessions that are actually active when NSAC is performed).

If the service area provided does not overlap with an already deployed tracking area or has a limited lifetime, deployment considerations may be discussed. In this case, how existing mechanisms, including network slicing, may help support such scenarios may also be discussed. If existing mechanisms are concluded to be insufficient to achieve the scenario, the existence and feasibility of additional mechanisms to address the analyzed gaps shall be investigated.

Whether and how to enhance NSAC support to avoid fragmentation of the maximum allowable number of shares may be investigated. For example, cases where two or more NSACFs are involved in enforcing the maximum allowable number of UE or PDU sessions shared for a network slice in a single PLMN or roaming may be investigated.

To close the gap between the scenario described in the above objective and the current situation, existing mechanisms may be reused to the extent possible. New mechanisms may not be introduced until it is proven that existing mechanisms cannot meet the scenario described in the objective.

As shown in the example of S2-2303249 below, if any S-NSSAI needs to be changed to an Alternative S-NSSAI, the NSSF shall notify the AMF that a slice replacement is necessary. The following 5.15.x is an example included in S2-2303249.

5.15.x Support of Network Slice Replacement

The network slice replacement feature is used to replace the S-NSSAI with an alternative S-NSSAI when the S-NSSAI is unavailable or congested. Network slice replacement may be triggered in the following cases:
- If the NSSF detects that the S-NSSAI is unavailable or congested (e.g., based on OAM or NWDAF analysis results), it sends a network slice availability notification (or alert) to the AMF. This notification may include an alternative S-NSSAI that the AMF may use to replace the S-NSSAI. The NSSF shall notify the AMF when the S-NSSAI becomes available again.
- If the PCF detects that the S-NSSAI is unavailable or congested for the UE (e.g., based on OAM or NWDAF analysis results), it sends an access and mobility policy notification to the AMF. This notification may include an alternative S-NSSAI that the AMF can use to replace the S-NSSAI. The PCF informs the AMF when the UE can use the S-NSSAI again.
- OAM sends a notification to AMF when S-NSSAI is unavailable or congested (and when this S-NSSAI becomes available again) and provides AMF with an alternative S-NSSAI.

Based on notification from the NSSF, PCF, or OAM, the AMF may decide that the S-NSSAI should be replaced with an Alternative S-NSSAI. In the case of roaming, the AMF may receive a network slice availability notification for the HPLMN S-NSSAI from the NSSF via the VPLMN's NSSF to trigger the network slice replacement of the HPLMN S-NSSAI as described in section 5.15.6 of TS 23.501.

Meanwhile, according to the following example S2-2303806, NSSF may receive congestion notification for NSI through implicit subscription.

This paragraph is an example of S2-2303806. A PDU session for a specific S-NSSAI is established using the selected network slice instance, and the S-NSSAI corresponding to this network slice instance may be related with multiple network slice instances. In this case, if the selected network slice instance is no longer available (e.g., due to overload), the network may change the network slice instance for the S-NSSAI. The NSSF may notify the AMF supporting the corresponding S-NSSAI that the network slice instance is congested or no longer available based on the implicit subscription of the AMF (e.g., trigger-based operation of OAM). The AMF may delete the NSI ID corresponding to the network slice instance that is no longer available. The AMF may use the NSI ID to notify the SMF of the selected PDU session to release the PDU session. Thereafter, the SMF may trigger the affected UE to establish new PDU sessions associated with the same S-NSSAI as described in Section 5.6.9.2 of 23.501 V17.7.0 for PDU sessions in SSC mode 2 and SSC mode 3. The AMF may select a new network slice instance, i.e., NSI ID, for a given S-NSSAI while the PDU session establishment procedure is being performed.

When replacing a network slice or a slice instance, two different subscribe methods are used. For example, one may be explicit subscribe and the other may be implicit subscribe. In the case of implicit subscribe, the NSSF does not know the capability information of the AMF. In this case, the NSSF does not know whether the AMF supports NSI ID replacement and may send unnecessary signaling. In particular, in a roaming scenario, H-NSSF may send unnecessary inter-PLMN signaling to V-NSSF. Additionally, when the NSSF notifies the AMF of congestion on the NSI ID, the NSSF only informs the AMF whether congestion has occurred on the NSI. As a result, after receiving the notification from the NSSF, the AMF may perform the process of querying the NSI ID from the NSSF again. This leads to the issue of unnecessary signaling occurring in the conventional system.

In other words, according to the prior arts, for NSI replacement, AMF must use implicit subscription for NSSF, and for network slice replacement, the AMF must use explicit subscription for the NSSF. That is, different subscription methods (one explicit subscription and the other implicit subscription) are used for network slice replacement and NSI replacement. In the case of implicit subscription, there is a problem that the NSSF does not know the capability information for the AMF. In this case, the NSSF may not know whether the AMF supports NSI ID replacement and may send unnecessary signaling. For example, in a roaming scenario, the H-NSSF may unnecessarily send inter-PLMN signaling to the V-NSSF.

In various examples of the present disclosure, the following methods are proposed to solve the problems. The methods presented below may be performed or used in combination or in a complementary manner.

Hereinafter, Alternative S-NSSAI may be used to mean the same as Alternative NSSAI, etc. NSI ID congestion may be used to mean the same as NSI ID unavailability.

In addition, the various examples below mainly describe the operation of AMF subscribing to events with NSSF. However, these are only examples, and V-NSSF may subscribe to events to H-NSSF in the same manner as the AMF subscribing to events to the NSSF in order to support Home Routed roaming. NSI ID replacement can be used in the same sense as Network Slice instance Replacement. Network Slice Replacement can be interpreted as slice replacement using Alternative S-NSSAI.

### 1. First example of the present disclosure

According to the first example of the present disclosure, an AMF may transmit an event subscription for slice replacement to NSSF. In this case, the AMF may include the event type requested by the AMF in the event subscription.

In the present disclosure, Event type/Event ID may be defined as shown in the following examples. For example, when the AMF performs event subscription to the NSSF, the AMF may inform the NSSF whether the subscription is a subscription requesting Alternative S-NSSAI notification or a subscription requesting NSI ID congestion notification. Specifically, the AMF may perform event subscription to the NSSF. The Event type/Event ID may be included in the message related to event subscription. Based on the Event type/Event ID, the AMF may inform the NSSF whether the subscription is requesting an Alternative S-NSSAI notification or an NSI ID congestion notification.

In the prior art, only implicit event subscription was used for NSI ID congestion events. Unlike the method according to the prior art, the present disclosure uses explicit event subscription even for NSI ID congestion events. An AMF may subscribe only to the events it needs (e.g., Alternative S-NSSAI notification and/or NSI ID congestion notification). In addition, while performing NSI ID congestion notification event subscription, the AMF may request that the NSSF optionally provide NSI IDs to be replaced. In this case, when performing congestion notification for a specific NSI ID, the NSSF may transmit NSI ID information to replace the specific NSI ID to the AMF.

For example, according to the first example of the present disclosure, the Nnssf_NSSAIAvailability_Subscribe / Unsubscribe service operation may be updated as follows.

An example of the Nnssf_NSSAIAvailability_Subscribe service operation is explained. For example, an NF service consumer (e.g., AMF) may transmit a message related to Nnssf_NSSAIAvailability_Subscribe including the Inputs information shown in the following example to the NSSF. Then, the NSSF may transmit a message related to Nnssf_NSSAIAvailability_Subscribe including the Outputs information shown in the following example to the NF service consumer (e.g., AMF).

### Service operation name : Nnssf_NSSAIAvailability_Subscribe

Description: This service operation allows NF service consumers (e.g., AMF) to subscribe to notifications of status changes in NSSAI availability information (e.g., S-NSSAI available per TA and, optionally, NSI ID, limited S-NSSAI per TA in the UE's service PLMN and, optionally, NSI ID) when these are updated by other AMFs.

Inputs, Required: NF service consumer callback URI, list of TAI supported by NF service consumer, events to subscribe to.

Inputs, Optional: Expiry time, Event ID, Event ID(s), Event Filter(s) associated with each Event ID.

### Outputs, Required: SubscriptionID,

Outputs, Conditional Required: Expiry time. For example, if the request related to service operation includes expiry time, the expiry time may be included in the response based on operator's policy and taking into account the expiry time present in the request (i.e., should be less than or equal to that value of the expiry time included in the request). If the expiry time not present in the request, the expiry time may be included in the response based on operator's policy. Whatever the case, if the expiry time is not included in the response, this means that the subscription is valid without an expiry time

Outputs, Optional: A list of TAIs and, for each TAI, the S-NSSAIs and optionally NSI IDs supported by the AMF and 5G-AN and authorized by the NSSF for the TAI and a list of S-NSSAIs and optionally NSI IDs restricted per PLMN for the TAI. Support of indicating Alternative S-NSSAI, Support of indicating Alternative NSI ID

An example of the Nnssf_NSSAIAvailability_Unsubscribe service operation is described. For example, an NF service consumer (e.g., AMF) may send a message related to the Nnssf_NSSAJAvailability Unsubscribe service operation to the NSSF, including the Inputs information as shown in the following example.
Service operation name: Nnssf_NSSAIAvailability_Unsubscribe

Description: This service operation enables a NF Service Consumer (e.g. AMF) to unsubscribe to a notification of any previously subscribed changes to the NSSAI availability information.
Inputs, Required: SubscriptionId.
Inputs, Optional: Event ID(s), Event Filter(s) associated with each Event ID.
Outputs, Required: None.
Outputs, Optional: None.

The Event Filter above may include a list for the slice (e.g., serving PLMN S-NSSAI + corresponding HPLMN S-NSSAI list, NSI ID list). The Event ID may include an ID for the slice replacement event and/or an ID for NSI ID congestion.

For example, Event ID may be defined as shown in the following example.

For example, the Event ID may be Alternative S-NSSAI. Alternative S-NSSAI may mean the following. When a consumer NF (e.g., AMF) subscribes to this event, the consumer NF (e.g., AMF) may receive information such as the following examples. For example, the consumer NF (e.g., AMF) may receive an alternative S-NSSAI for S-NSSAI, or the consumer NF (e.g., AMF) may receive an alternative S-NSSAI for S-NSSAI by subscribing to this event and receiving a notification when the alternative S-NSSAI becomes congested or unavailable.

In another example, the Event ID may be an Alternative NSI ID. A consumer NF (e.g., AMF) may subscribe to this event to receive an alternative NSI ID when the NSI becomes congested or unavailable. Alternatively, a consumer NF (e.g., AMF) may subscribe to this event to receive a notification when the NSI becomes congested or unavailable.

Event ID and Event Filter may be included in both Event subscribe and Unsubscribe. If Event ID and Event Filter are included in Unsubscribe, consumer NF (e.g., AMF) may unsubscribe only a part of the events subscribed through subscribe. For example, a consumer NF (e.g., AMF) may have subscribed to events for NSI ID#1 and NSI ID#2. In this case, the consumer NF (e.g., AMF) may unsubscribe only to events for NSI ID#1.

The NSSF may receive an event subscription as shown in the example above. In this case, the NSSF may inform the AMF through the event subscription response whether the NSSF can directly provide the Alternative S-NSSAI and Alternative NSI ID. For example, the NSSF may transmit a response that includes information related to whether the NSSF can directly provide the Alternative S-NSSAI and Alternative NSI ID to the AMF. If the NSSF cannot provide the Alternative S-NSSAI, but the AMF may receive the Alternative S-NSSAI event from the NSSF. In this case, the AMF may request the PCF to determine the Alternative S-NSSAI. If the NSSF cannot provide the Alternative NSI ID, but the AMF receives an Alternative NSI ID event from the NSSF, the AMF may select a new NSI ID according to the conventional procedure (e.g., the SMF selection procedure in clause 4.3.2.2.3 of TS 23.502 V17.7.0).

Alternatively, as shown in the example below, Event notification and Alternative S-NSSAI / alternative NSI ID notification may be defined respectively for Event ID.

Event ID may be S-NSSAI Congestion. When an NF consumers (e.g., AMF) subscribes to an event related to Event ID including S-NSSAI Congestion, the NF consumers (e.g., AMF) may receive the congestion status of S-NSSAI.

The Event ID may be NSI Congestion. If an NF consumer (e.g., AMF) subscribes to an event related to Event ID including NSI Congestion, the NF consumer (e.g., AMF) may receive congestion or unavailability of the NSI ID.

The Event ID may be Alternative S-NSSAI. If an NF consumer (e.g., AMF) subscribes to an event related to Event ID including Alternative S-NSSAI, the NF consumer (e.g., AMF) may receive the Alternative S-NSSAI(s) for the S-NSSAI.

The Event ID may be an Alternative NSI ID. If an event with an Alternative NSI ID is included in the Event ID, the NF consumer (e.g., AMF) may receive an alternative NSI ID if the NSI is congested or the NSI ID is unavailable.

Alternatively, an indication requesting Alternative S-NSSAI / Alternative NSI ID may be added to the Event Filter.

The following is an example of updating the Nnssf_NSSAIAvailability_Notify service operation. The NSSF may decide whether to transmit Alternative S-NSSAI, Alternative NSI ID, etc. based on the Event ID and Event Filter information provided by AMF while performing event subscription.

This section describes an example of the Nnssf_NSSAIAvailability__Notify service operation. For example, the NSSF may transmit a message related to Nnssf_NSSAIAvailability__Notify including the Inputs information shown in the following example to the NF service consumer (e.g., AMF).
Service operation name: Nnssf_NSSAIAvailability_Notify
Description: This service operation enables the NSSF to update a NF Service Consumer (e.g. AMF) with any S-NSSAIs restricted per TA and, if needed, subsequently lift any restriction per TA.
Inputs, Required: SubscriptionId, a list of TAIs and the S-NSSAIs for which the status has changed (restricted/unrestricted) per each TAI.
Inputs, Optional: NSI IDs in the S-NSSAI for which the status has (or is) changed (restricted/unrestricted) per each TAI.

If event notification is triggered by event subscription for an alternative S-NSSAI, the Inputs, Optional information may include the TAI list, the S-NSSAI list, and the corresponding alternative S-NSSAI list for each TAI.

If an event notification is triggered by event subscription for an alternative NSI ID, the inputs, optional information may include the TAI list, the S-NSSAI list, and the corresponding alternative S-NSSAI list for each TAI.
Outputs, Required: None.
Outputs, Optional: None.

Event IDs may be assigned/generated separately for Event notification and Alternative S-NSSAI / alternative NSI ID notification. In this case, the following may be added to the Inputs, Optional information in the example of the Nnssf_NSSAIAvailability_Notify service operation above:
i) If an event notification is triggered by event subscription on S-NSSAI congestion, the Inputs, Optional information may include a list of TAIs and the congested S-NSSAI for each TAI.
ii) When an event notification is triggered by event subscription on NSI congestion, the Inputs, Optional information may include a list of TAIs, S-NSSAIs, and NSI IDs that are congested for each TAI.
iii) If an event notification is triggered by event subscription on an alternative S-NSSAI, the Inputs, Optional information may include the TAI, S-NSSAI, and a list of alternative S-NSSAI for each TAI.
iv) If an event notification is triggered by event subscription on an alternative NSI ID, the Inputs, Optional information may include the TAI, S-NSSAI, NSI ID, and a list of alternative NSI IDs for each TAI.

In the various examples described above, when information is provided, an Event ID corresponding to the information may also be provided.

For the list of TAIs and the S-NSSAIs for which the status has (or is) changed (restricted/unrestricted) per each TAI related to the Inputs, Required information in the Nnssf_NSSAIAvailability__Notify service operation, the following description may apply. For example, in the case of a list of TAIs and the S-NSSAIs for which the status has (or is) changed (restricted/unrestricted) per each TAI, it may not be provided when there is no applicable item (e.g., when the status is not changed). In this case, a list of TAIs and the S-NSSAIs for which the status has (or is) changed (restricted/unrestricted) per each TAI may need to be changed to Inputs, Optional information. Alternatively, a list of TAIs and the S-NSSAIs for which the status has (or is) changed (restricted/unrestricted) per each TAI may be kept as Inputs, Required information. In this case, if there is no applicable item, a null/empty value may be configured to indicate that this information is not provided.

### 2. Second example of the present disclosure

The second example of the present disclosure may be an example of a specific application of the first example of the present disclosure.

The slice replacement notification of the NSSF is described.

Based on the implicit subscription of the AMF, the NSSF may notify the congestion of the network slice instance. Furthermore, when the NSSF notifies congestion, the NSSF does not provide the AMF with new network slice instance information. As a result, the AMF must trigger the Nnssf_NSSelection_Ger service during the PDU session establishment procedure to interact with the NSSF again.

A PDU session for a specific S-NSSAI is configured using the selected network slice instance, and the S-NSSAI related to to this network slice instance is associated with multiple network slice instances. In this case, the network may change the network slice instance for the S-NSSAI if the selected network slice instance is no longer available (e.g., due to overload). The NSSF informs the AMF that supports the S-NSSAI that the network slice instance is congested or no longer available based on the AMF's implicit subscription (e.g., based on trigger from OAM). The AMF deletes the NSI ID related to the network slice instance that is no longer available. The AMF may use the NSI ID to notify the SMF of the selected PDU session to release the PDU session. Thereafter, the SMF triggers the affected UE(s) to establish a new PDU session related with the same S-NSSAI as described in section 5.6.9.2 of TS 23.501 V17.3.0 for PDU sessions in Session and Service Continuity (SSC) mode 2 and SSC mode 3. The AMF may select a new network slice instance for a given S-NSSAI while the PDU session establishment procedure is being performed.

Observation 1: For network slice instance replacement, the NSSF transmits a notification to the AMF based on implicit event subscription. The AMF may select a new network slice instance by triggering the Nnssf_NSSelection_Ger service during the PDU session establishment procedure.

In another example, the AMF must subscribe to the NSSF service. When the NSSF provides notification to the AMF, the NSSF may transmit a notification including the replacement S-NSSAI to the AMF. If the NSSF provides a replacement S-NSSAI, the AMF may determine the replacement S-NSSAI based on local configuration. Therefore, no additional signaling is required to determine the replacement S-NSSAI.

The AMF may be configured to support network slice replacement and to use the NSSF to trigger network slice replacement. In this case, the AMF may subscribe to the NSSF to receive a notification when one of the S-NSSAI provided by the AMF (e.g., the S-NSSAI of the serving PLMN and, in the case of roaming, the HPLMN S-NSSAI) needs to be replaced, as described in the following paragraph. The serving AMF may be configured to support network slice replacement and to use the NSSF for network slice replacement triggering. In this case, the AMF may subscribe to the NSSF of the VPLMN for notification when the HPLMN S-NSSAI needs to be replaced with an alternative S-NSSAI, in addition to notification of the serving PLMN S-NSSAI. The NSSF of the VPLMN may subscribe to the NSSF of the HPLMN for notification when the HPLMN S-NSSAI needs to be replaced with an alternative S-NSSAI.

Based on the notification from the NSSF or PCF, the AMF may determine an alternative S-NSSAI for the UE registered based on the S-NSSAI. Alternatively, if the NSSF or PCF does not provide an alternative S-NSSAI, the AMF may determine an alternative S-NSSAI based on local configuration. The alternative S-NSSAI shall be supported in the UE registration area. There may be cases where the AMF cannot determine an alternative S-NSSAI for the S-NSSAI, e.g., when the PCF or NSSF does not provide an alternative S-NSSAI. In this case, the AMF may interact further with the PCF to determine an alternative S-NSSAI. The event triggers for the AMF to interact with the PCF are described in TS 23.503 V17.7.0, Section 6.1.2.5.

Observation 2: In the case of network slice replacement, the NSSF provides AMF based on explicit event subscription. When the NSSF notifies an event, the NSSF may provide an alternative S-NSSAI. If the NSSF does not provide an alternative S-NSSAI, the AMF determines the alternative S-NSSAI based on local configuration.

According to observations 1 and 2, the overall system operation according to the prior art differs significantly in each case. Furthermore, in the case of network slice instance replacement, there is a problem that it is unclear whether and how it works in the home routing roaming scenario. For example, it is unclear whether and how the hNSSF knows/selects the vNSSF to which it will send congestion notifications, and whether such notifications are performed by implicit subscription or explicit subscription. If explicit subscription is not used between the hNSSF and the vNSSF, it is unclear how the hNSSF may determine the vNSSF to which the hNSSF will send notifications. Taking these aspects into consideration and in order to match the two cases of network slice instance replacement and network slice replacement, the following is proposed. It is proposed that explicit subscription be used instead of implicit subscription for network slice instance replacement. For reference, subscription in the present disclosure means subscription. Subscription and subscription may be used interchangeably.

Proposal 1: Use explicit subscription instead of implicit subscription for network slice instance replacement.

An AMF may explicitly indicate which events during network slice replacement and/or network slice instance replacement to subscribe to in the NSSF. The AMF may send both notifications when subscribing to slice replacement events, but some networks may only support one of them. Therefore, to avoid unnecessary signaling, the AMF may explicitly indicate the event type to the NSSF. According to various examples in the present disclosure, unnecessary signaling may be reduced.

Proposal 2: When an AMF subscribes to slice replacement notification events, it is proposed that the AMF indicates the slice replacement event type, such as network slice replacement and/or network slice instance replacement, to the NSSF.

Hereinafter, the various examples of the present disclosure may be applied to the contents of 3GPP TS 23.501.

According to the prior art, there are the following problems. In the case of a home routing roaming scenario, there is a problem that it is unclear how network slice instance replacement is performed. There is a problem that the mechanisms between network slice replacement and network slice instance replacement do not match.

In the case of network slice instance replacement, the NSSF may send a notification based on implicit subscription. However, compared to network slice replacement, the procedures related to network slice instance replacement are significantly different, and there is no need to have different procedures for similar mechanisms.

To obtain network slice instance replacement notifications, explicit subscription is suggested instead of implicit subscription to NSSF.

An example of establishing a PDU session related to a network slice is described.

When a PDU session is established in a network slice instance with DN, data may be transmitted in the network slice instance. A PDU session may be associated with S-NSSAI and DNN. The UE may be registered in the PLMN through the Access Type, and the UE may obtain the corresponding allowed NSSAI. In this case, the UE shall indicate the S-NSSAI in accordance with the NSSP of the URSP rule or the UE local configuration in the PDU session establishment procedure. If possible, the UE may indicate the DNN related to the PDU session in the PDU session establishment procedure. The UE may include an appropriate S-NSSAI from among these allowed NSSAIs in the PDU session establishment request message. If a mapping of allowed NSSAIs and HPLMN S-NSSAIs is provided, the UE may include an S-NSSAI having a corresponding value from this mapping in the PDU session establishment request message.

If, after the UE performs the operation of association of the application to the PDU session, the S-NSSAI cannot be determined, the UE does not indicate the S-NSSAI in the PDU session configuration procedure.

The network (HPLMN) may provision the UE with a Network Slice selection policy (NSSP) as part of the URSP rules. When the subscription information includes more than one of S-NSSAI, and the network may want to control/modify the UE's use of those S-NSSAI. In this case, the network may provision/update the UE with an NSSP as part of the URSP rules. If the subscription information includes only one S-NSSAI, the network does not need to provision the NSSP to the UE as part of the URSP rules. The NSSP rules may associate an application with one or more HPLMN S-NSSAIs. A default rule which matches all applications to the HPLMN S-NSSAI may also be included.

The UE may store and use URSP rules that include NSSPs. When a UE application associated with a specific S-NSSAI requests data transmission, the following example may apply:
- The UE has one or more PDU sessions established corresponding to a specific S-NSSAI. In this case, unless other conditions of the UE prohibit the use of these PDU sessions, the UE routes the user data of this application on one of these PDU sessions. If the application provides a DNN, the UE may also consider this DNN when determining which PDU session to use.
- If the UE does not have a PDU session configured with this specific S-NSSAI, the UE may request a new PDU session corresponding to this S-NSSAI and the DNN that can be provided by the application. In order to select the appropriate resources for supporting network slicing in the RAN, the RAN must know the network slice(s) used by the UE.

If the AMF cannot determine the appropriate NRF to query for the S-NSSAI provided by the UE, the AMF may query the NSSF with this particular S-NSSAI, location information, and the PLMN ID of the SUPI. The NSSF may determine and return (or respond with) the appropriate NRF to be used for selecting the NF/service within the selected network slice instance. The NSSF may also return (or respond with) the NSI ID to be used for selecting the NF to be used for this S-NSSAI within the selected network slice instance.

Based on load levels and/or NWDAF service experience observation (Observe Service Experience) and/or dispersion analytics, AMF or NSSF may select S-NSSAI (if UE does not provide S-NSSAI for PDU session configuration) and network slice instances.

The IP address or FQDN of the NSSF is configured locally in the AMF.

SMF discovery and SMF selection within the selected network slice instance is initiated by the AMF when an SM message to establish a PDU session is received from the UE. The appropriate NRF is used to assist the discovery and selection tasks of required network functions for the selected network slice instance.

When the UE triggers the PDU session establishment procedure, in order to select the SMF, based on the S-NSSAI, DNN, NSI-ID (if available), and other information, the AMF may query the appropriate NRF in the network slice instance. For example, other information may include UE subscription and local operator policies. The AMF may select an SMF from among the SMF instances returned by the NRF based on network data analysis (e.g., NF load) by the NWDAF or configured locally in the AMF. The selected SMF configures the PDU session based on the S-NSSAI and DNN.

If an AMF belongs to multiple network slice instances, depending on the configuration, the AMF may use the appropriate level of NRF for SMF selection.

If a PDU session for a specific S-NSSAI is configured using a specific network slice instance, the CN provides the S-NSSAI corresponding to this network slice instance to the (R)AN so that the RAN may perform access-specific functions.

The UE shall not perform PDU session handover from one access type to another if the S-NSSAI of the PDU session is not included in the allowed NSSAI of the target access type.

A PDU session for a specific S-NSSAI is established using the selected network slice instance, and the S-NSSAI corresponding to this network slice instance may be associated with multiple network slice instances. In this case, the network may change the network slice instance for the S-NSSAI if the selected network slice instance is no longer available (e.g., due to overload). The AMF may support network slice instance replacement, and the AMF may be configured to use network slice instance replacement. In this case, when the network slice instance provided by the AMF needs to be replaced, the AMF may subscribe to the NSSF to receive a notification. The NSSF informs the AMF that the network slice instance is congested or no longer available, and includes a new NSI ID to replace the existing NSI in the notification. The AMF deletes the previous NSI ID corresponding to the network slice instance that is no longer available and stores the new NSI ID. The SMF of the selected PDU session using this previous NSI ID may be notified by the AMF of the release of the PDU session. Thereafter, the SMF may trigger the affected UE(s) to configure new PDU sessions associated with the same S-NSSAI for PDU sessions in SSC mode 2 and SSC mode 3.

Below, examples are described in which the present disclosure applies to the description related to 3GPP TS 23.502.

NSSF notifications for network slice replacement and network slice instance replacement may be supported.

Although the operation of AMF subscribing to NSSF for network slice replacement was limited to TS 23.501, this operation was not discussed in TS 23.502.

For network slice instance replacement, the NSSF transmits notifications based on implicit subscription. However, the procedure is significantly different from network slice replacement, and there is no need for a different procedure for a similar mechanism.

The operation of the NSSF service may be defined to support network slice replacement and network slice instance replacement.

On the other hand, according to the prior art, NSSF notifications for network slice replacement and network slice instance replacement were not supported.

The following describes examples of NSSF services according to the examples of the present disclosure.

**[Table 3]**

| Service Name | Service Operations | Operation Semantics | Example Consumer(s) |
|---|---|---|---|
| Nnssf_NSSelection | Get | Request/Response | AMF, NSSF in a different PLMN, SMF, NWDAF |
| Nnssf_NSSAIAvailability_ | Update | Request/Response | AMF |
| | Subscribe | Subscribe/Notify | AMF, NSSF |
| | Unsubscribe | | AMF, NSSF |
| | Notify | | AMF, NSSF |
| | Delete | Request/Response | AMF |

According to the example in Table 3, NSSF may be an NF consumer of service operations related to Nnssf_NSSelection and service operations related to Nnssf_NSSAIAvailability.

For reference, SMF may use the Nnssf_NSSelection_Get service operation during EPS interworking.

The following sections describe in detail the various service operations described in the example in Table 3.

Various examples of the Nnssf_NSSelection service are described.

An example of the operation of the Nnssf_NSSelection_Get service is as follows. For example, an NF service consumer (e.g., AMF) may transmit an Nnssf_NSSelection_Get-related message including the Inputs information shown in the following example, to NSSF. Then, NSSF may transmit an Nnssf_NSSelection_Get-related message including the Outputs information shown in the following example to the NF service consumer (e.g., AMF).

### Service operation name: Nnssf_NSSelection_Get

Description: This service operation allows the selection of a network slice in both the serving PLMN and the HPLMN. In addition, the NSSF may provide the AMF with the NSSAI allowed and the configured NSSAI for the serving PLMN. The NSSF may also provide the corresponding NSAG information.

This service operation may be invoked during the registration procedure, during the inter-PLMN mobility procedure, during the PDU session setup procedure, or during the UE configuration update procedure. When invoked during the registration procedure, this service operation may trigger an AMF re-allocation. When invoked during the PDU session establishment procedure, this service operation may be invoked by the VPLMN or the HPLMN. When invoked in the VPLMN, this service operation returns the hNRF selected by the hNSSF and, if applicable, the HPLMN NSI ID value. When invoked during the UE configuration update procedure or inter-PLMN mobility procedure, this service operation may be invoked in the serving PLMN.
Note 1: The list of events that trigger the Nnssf_NSSelection_Get service operation is not exhaustive.
Note 2: NSSF may determine the service network and access type in TAI.
Inputs, Required: None.
Inputs, Conditional Required:

If this service operation is invoked during the registration procedure or UE configuration update procedure for network slice selection, the following input information is required: - S-NSSAI subscribed with the indication marked as default S-NSSAI, PLMN ID of SUPI, TAI, NF type of NF service consumer, and requester ID.

If this service operation is invoked to derive the S-NSSAI of the serving PLMN, the following input information is required: - S-NSSAI for the HPLMN associated with the established PDN connection, PLMN ID of the SUPI, NF type of the NF service consumer, and requester ID.

If this service operation is invoked by the target AMF during the inter-PLMN transfer procedure, the following input information is required: - S-NSSAI of the HPLMN, PLMN ID of the SUPI, TAI.

If this service operation is invoked by the SMF+PGW-C during PDN connection setup in the serving PLMN of the EPS, the following input information is required: - Subscribed S-NSSAI for the UE, PLMN ID of the SUPI, NF type of the NF service consumer, and requester ID.

If this service operation is invoked during the PDU session configuration procedure in the serving PLMN, the following input information is required: - S-NSSAI, non-roaming/LBO roaming/HR roaming indication, PLMN ID of the SUPI, TAI, NF type of the NF service consumer, and requester ID.

### Inputs, Optional:

When this service operation is invoked during the registration procedure or UE configuration update procedure for network slice selection, the following input information is provided, if available: - Requested NSSAI, Mapping Of Requested NSSAI, Default Configured NSSAI Indication, NSSRG Information, UE support of subscription-based restrictions to simultaneous registration of network slice feature Indication, UDM indication to provide all subscribed S-NSSAIs for UEs not indicating support of subscription-based restrictions to simultaneous registration of network slices, Allowed NSSAI for current Access Type, Allowed NSSAI for the other Access Type and the corresponding Mapping Of Allowed NSSAIs for current Access Type and other Access Type, Rejected S-NSSAI(s) for RA, UE support of NSAG Information.

If this service operation is invoked during the PDU session establishment procedure, the following input information may be optional: - HPLMN S-NSSAI mapped to S-NSSAI from the allowed NSSAI of the serving PLMN.

### Outputs, Conditional Required:

If this service operation is invoked during registration procedure for Network Slice selection or the UE configuration update procedure, one or more of the following output information may be required: - Allowed NSSAI, configured NSSAI; Target AMF set or list of candidate AMF(s) based on the configuration.

If this service operation is invoked during the PLMN mobility procedure, one or more of the following output information is required: - Allowed NSSAI.

If this service operation is invoked to derive the S-NSSAI for the serving PLMN, the following output information is required: - S-NSSAIs for the HPLMN associated with established PDN connection, Mapping of S-NSSAIs associated with established PDN connection in the Serving PLMN.

If this service operation is invoked by the SMF+PGW-C during PDN connection setup in the serving PLMN of the EPS, the following output information is required: - Subscribed S-NSSAIs for the UE, Mapping of S-NSSAIs associated with the subscribed S-NSSAIs for the UE in the Serving PLMN.

If this service operation is invoked during the PDU session setup procedure, the following output is required: - The NRF to be used to select NFs/services within the selected Network Slice instance.

### Outputs, conditional Optional:

If this service operation is invoked during UE Registration procedure or UE Configuration Update procedure, then one or more of the following output information are optional:
- Mapping Of Allowed NSSAI, Mapping Of Configured NSSAI, NSI ID(s) associated with the Network Slice instances of the Allowed NSSAI, NRF(s) to be used to select NFs/services within the selected Network Slice instance(s) and NRF to be used to determine the list of candidate AMF(s) from the AMF Set, rejected S-NSSAI with cause of rejection, Target NSSAI, the NSAG information

If this service operation is invoked during inter-PLMN mobility procedure, then the following output information is optional: - Mapping Of Allowed NSSAI.

If this service operation is invoked during the PDU session establishment procedure, the following output information is optional: - NSI ID associated with the S-NSSAI provided in the input information.

Various examples of the Nnssf_NSSAIAvailability_service are described.

Service description: This service may be used to update the AMF and NSSF on the availability of the S-NSSAI and NSAG for each TA. This service is also used to provide the NF service consumer with an alternative S-NSSAI and/or NSI ID if the NSSF determines that the S-NSSAI and/or NSI ID must be replaced.

NOTE: The NSSF may determine the service network and access type based on TAI.

Nnssf_NSSAIAvailability_Update This section describes an example of service operation. For example, an NF service consumer (e.g., AMF) may transmit an Nnssf_NSSAIAvailability_Update-related message including the Inputs information shown in the following example to the NSSF. The NSSF may then transmit an Nnssf_NSSAIAvailability_Update-related message including the Outputs information shown in the following example to the NF service consumer (e.g., AMF).

### Service operation name: Nnssf_NSSAIAvailability_Update

Description: This service operation enables the AMF to update the NSSF with the S-NSSAIs the AMF supports per TA and get the availability of the S-NSSAIs and optionally NSI IDs per TA for the S-NSSAIs the AMF supports.

### Inputs, Required: Supported S-NSSAIs per TAI.

The supported S-NSSAIs per TAI, is a list of TAIs and for each TAI the S-NSSAIs supported by the AMF.

### Inputs, Optional: Supported NSAGs per TAI.

The supported NSAGs per TAI, is a list of TAIs and for each TAI the NSAGs and the associated S-NSSAIs supported by the AMF.

Outputs, Required: A list of TAIs and, for each TAI, the S-NSSAIs and optionally NSI IDs supported by the AMF and 5G-AN and authorized by the NSSF for the TAI.

Outputs, Conditional Required: A list of TAIs and, for each TAI, the NSAGs authorized by the NSSF for the TAI.

The authorized NSAGs per TAI, is a list of TAIs and for each TAI the NSAGs and the associated S-NSSAIs.

Outputs, Optional: For each TAI, a list of S-NSSAIs restricted per PLMN for the TAI.

This section describes an example of the operation of the Nnssf_NSSAIAvailability_Notify service. For example, NSSF may transmit a message related to Nnssf_NSSAIAvailability_Notify including the Outputs information shown in the following example to an NF service consumer (e.g., AMF).

### Service operation name: Nnssf_NSSAIAvailability_Notify

Description: This service operation enables the NSSF to update a NF Service Consumer (e.g. AMF) with any S-NSSAIs restricted per TA and, if needed, subsequently lift any restriction per TA. This service operation is also enables to notify an NF Service Consumer (e.g. AMF) with network slice replacement information.

### Inputs, Required: SubscriptionId

### Inputs, Conditional Required:

If this service operation is invoked by subscribing to changes in NSSAI availability status, the following input information is required: - a list of TAIs and the S-NSSAIs for which the status has (or is) changed (restricted/unrestricted) per each TAI.

If this service operation is invoked by subscribing to event notifications for slice replacement, the following input information is required:
- For Network Slice Replacement: an Alternative S-NSSAI and the corresponding mapping to the S-NSSAI to be replaced.
- For Network Slice instance Replacement: a new NSI ID and the corresponding mapping to the old NSI ID to be replaced.

Inputs, Optional: NSI ID of the S-NSSAI for which the status has (or is) changed (restricted/unrestricted) for each TAI.

### Outputs, Required: None.

### Outputs, Optional: None.

An example of the operation of the Nnssf_NSSAIAvailability_Subscribe service is as follows. For example, an NF service consumer (e.g., AMF) may transmit a message related to Nnssf_NSSAIAvailability_Subscribe including the Inputs information shown in the following example to the NSSF. Then, the NSSF may transmit a message related to Nnssf_NSSAIAvailability Subscribe including the Outputs information shown in the following example to the NF service consumer (e.g., AMF).

### Service operation name: Nnssf_NSSAIAvailability_Subscribe

Description: Based on this service operation, an NF service consumer (e.g., AMF) may subscribe to notification of any changes in status of the NSSAI availability information (e.g., S-NSSAI available per TA and optionally NSI ID, S-NSSAI limited per TA in the UE's service PLMN and optionally NSI ID) upon this is updated by another AMF. In addition, through this service operation, NF service consumers (e.g., AMF or NSSF in VPLMN) may subscribe to notifications when the S-NSSAI and/or NSI ID must be replaced with an alternative S-NSSAI and/or a new network slice instance. For example, based on this service operation, NF service consumers (e.g., AMF or NSSF of VPLMN) may subscribe to notifications of network slice replacement and network slice instance replacement.

### Inputs, Required: Callback URI of the NF Service Consumer.

### Inputs, Conditional Required:

If this service operation is invoked to subscribe for change in status of the NSSAI availability information, then the following input information is required:
- list of TAIs supported by the NF service consumer, event to be subscribed.

The following input information is required when invoking this service operation to subscribe to notifications about network slice replacements:
- Event ID(s). e.g., Network Slice Replacement and/or Network Slice instance Replacement.
- List of S-NSSAIs for Network Slice Replacement
- List of NSI IDs for Network Slice instance Replacement

For example, for the S-NSSAI of the serving PLMN, the input information may include a set of S-NSSAIs to be served by the NF service consumer and replaced, the NF type (e.g., AMF) of the NF service consumer, the requester ID, and the event information (e.g., event ID) to be subscribed to.

For example, for the S-NSSAI of the HPLMN, the input information may include the S-NSSAIs of the HPLMN, the NF type (e.g., AMF, NSSF) of the NF service consumer, the requester ID, the PLMN ID, and the event information (e.g., event ID) to be subscribed to.
Inputs, Optional: Expiry time.
Outputs, Required: SubscriptionID,
Outputs, Conditional Required:

If this service operation is invoked to subscribe for changes in status of the NSSAI availability information, then the following output information is required:
- Expiry time. For example, if the request related to service operation includes expiry time, the expiry time may be included in the response based on operator's policy and taking into account the expiry time present in the request (i.e., should be less than or equal to that value of the expiry time included in the request). If the expiry time not present in the request, the expiry time may be included in the response based on operator's policy. Whatever the case, if the expiry time is not included in the response, this means that the subscription is valid without an expiry time.

When invoking this service operation to subscribe to slice replacement notifications, the following output information is required:
- For Network Slice Replacement: an Alternative S-NSSAI and the corresponding mapping to the S-NSSAI to be replaced.
- For Network Slice Instance Replacement: a new NSI ID and the corresponding mapping to the old NSI ID to be replaced.

Outputs, Optional: A list of TAIs and, for each TAI, the S-NSSAIs and optionally NSI IDs supported by the AMF and 5G-AN and authorized by the NSSF for the TAI and a list of S-NSSAIs and optionally NSI IDs restricted per PLMN for the TAI.

An example of the Nnssf_NSSAIAvailability_Unsubscribe service operation is described. For example, an NF service consumer (e.g., AMF) may transmit a message related to the Nnssf_NSSAIAvailability_Unsubscribe service operation to the NSSF, including the Inputs information as shown in the following example.

### Service operation name: Nnssf_NSSAIAvailability_Unsubscribe

Description: This service operation enables an NF Service Consumer (e.g. AMF) to unsubscribe to a notification of any previously subscribed changes to the NSSAI availability information.

### Inputs, Required: SubscriptionId.

### Inputs, Optional: None.

### Outputs, Required: None.

### Outputs, Optional: None.

An example of the Nnssf_NSSAIAvailability_Delete service operation is described. For example, an NF service consumer (e.g., AMF) may transmit a message related to Nnssf_NSSAIAvailability_Delete including the following Inputs information to the NSSF.

### Service operation name: Nnssf_NSSAIAvailability_Delete

Description: This service operation enables an NF service consumer (e.g., AMF) to delete the NSSAI availability information stored for the NF service consumer in the NSSF.

### Inputs, Required: NfId.

### Inputs, Optional: None.

### Outputs, Required: None.

### Outputs, Optional: None.

The following description may apply to the various examples described in the first and second examples of the present disclosure.

According to the first and second examples disclosed in the present disclosure, instead of using existing services such as Nnssf_NSSAIAvailability_Subscribe / Nnssf_NSSAIAvailability_Notify, new services may be defined. For example, services such as Nnssf_NSSAIReplacement Subscribe / Nnssf_NSSAIReplacement Notify may be used.

As another example, instead of subscribing to notifications for Network Slice Replacement and Network Slice instance Replacement using Event ID, different services may be used. For example, AMF and NSSF may perform notifications for Network Slice Replacement using Nnssf_NSSAIReplacement Subscribe / Nnssf_NSSAIReplacement Notify. In another example, AMF and NSSF may perform Network Slice instance Replacement using Nnssf_NSSAIInstanceReplacement_Subscribe / Nnssf_NSSAIInstanceReplacement Notify.

In addition, instead of the Event ID described above, a specific indication may be added to the input parameter. Based on such indication, the AMF and/or NSSF may distinguish whether it is a subscribe/notification for Network Slice Replacement or a subscribe/notification for Network Slice instance Replacement.

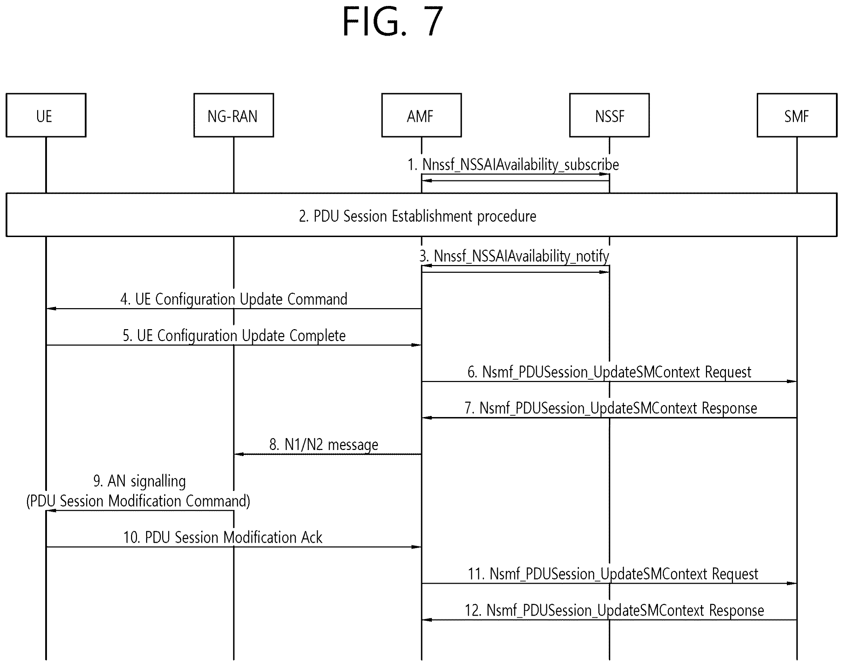

In the following, with reference to the examples shown in FIGS. 7 to 9, examples of application of various examples of the present disclosure are described.

The following drawings are provided to explain specific examples of the present disclosure. The names of specific devices, signals, messages, and fields shown in the drawings are provided as examples, and the technical features of the present disclosure are not limited to the specific names used in the following drawings.

**FIG. 7** **is an example of a procedure related to network slice replacement according to an embodiment of the present disclosure.**
1. AMF may perform event subscription for Network Slice Replacement to NSSF. At this time, AMF may include "SNSSAI_REPLACEMENT_REPORT" information in the event type to notify event subscription for Network Slice Replacement. For example, the AMF may perform the subscription by transmitting a subscription request message with the event type "SNSSAI_REPLACEMENT_REPORT" to the NSSF.
2. The terminal may perform PDU session establishment as shown in FIG. 5 and FIG. 6. In this process, a PDU session based on S-NSSAI#1 may be generated. For example, the UE may transmit a PDU session establishment request message including S-NSSAI#1.
3. The NSSF may send a notification indicating that it is necessary to replace S-NSSAI#1 with S-NSSAI#2, to the AMF.
4-5. The AMF may notify the terminal of the Alternative S-NSSAI information (e.g., information indicating that S-NSSAI#1 should be replaced with S-NSSAI#2) while performing the UE Configuration Update procedure. At this time, the AMF may transmit the Allowed NSSAI to the terminal. Here, the AMF may include the Alternative S-NSSAI in the Allowed NSSAI and transmit it to the terminal.
6. The AMF may notify the SMF of the Alternative S-NSSAI. For example, the AMF may transmit a request message (e.g., Nsmf_PDUSession_UpdateSMContext Request) including the Alternative S-NSSAI to the SMF.
7-9. The SMF may transmit a response message to the AMF in order to change the slice of the PDU session to S-NSSAI#2 while maintaining the current PDU session. The response message transmitted by the SMF may include a PDU Session Modification Command and a PDU Session Resource Modify. At this time, the SMF may notify the terminal that the slice of the PDU session has been changed to S-NSSAI#2 by including Alternative S-NSSAI in the PDU Session Modification Command. In addition, the SMF may cause the slice of the PDU session to be changed to S-NSSAI#2 by including S-NSSAI#2 in the PDU Session Resource Modify. For example, the SMF may transmit a response message (e.g., Nsmf_PDUSession_UpdateSMContext Response) to the AMF. Then, the AMF may transmit an N1/N2 message including a PDU Session Modification Command and a PDU Session Resource Modify to the NG-RAN. Then, the NG-RAN may transmit an AN signaling message including a PDU Session Modification Command to the UE.
10. The terminal checks that the slice of the PDU session has been changed to S-NSSAI#2, and may transmit a PDU session modification Ack(acknowledgment) to the SMF via the AMF.
11-12. The AMF may transmit the PDU session modification Ack(acknowledgment) transmitted by the terminal to the SMF.

The following drawings are provided to explain specific examples of the present disclosure. The names of specific devices, signals, messages, and fields shown in the drawings are provided as examples, and the technical features of the present disclosure are not limited to the specific names used in the following drawings.

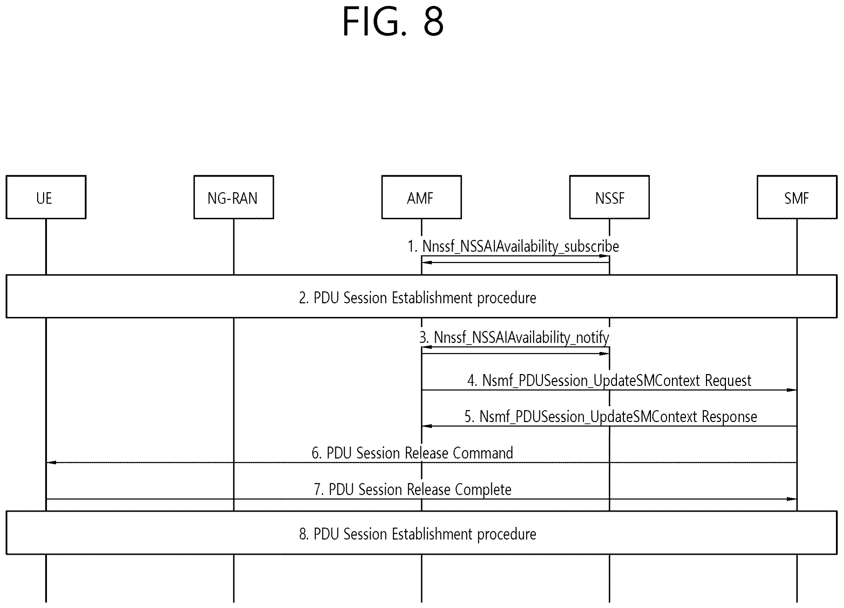

**FIG. 8** **is an example of a procedure related to network slice instance replacement according to an embodiment of the present disclosure.**
1. AMF may perform event subscription for Network Slice Replacement to NSSF. At this time, AMF may include "NSI_UNAVAILABILITY_REPORT" in the event type to notify event subscription for Network Slice instance Replacement. For example, the AMF may perform subscription by transmitting a subscription request message with event type "NSI_UNAVAILABILITY_REPORT" to the NSSF.
2. The terminal may perform PDU session establishment according to the examples shown in FIG. 5 and FIG. 6. In this process, a PDU session based on S-NSSAI#1 may be established. In addition, the AMF may generate a PDU session using NSI ID#1.
3. The NSSF may transmit a notification informing that congestion has occurred in NSI ID#1 of S-NSSAI#1. Upon receiving this notification, the AMF may delete NSI ID#1 from the PDU session context.
4-5. The AMF may notify the SMF that the PDU session needs to be released and then regenerated. For example, the AMF may invoke the Nsmf_PDUSession_UpdateSMContext service operation. Specifically, the AMF may request the release of the PDU session by invoking the Nsmf_PDUSession_UpdateSMContext service operation and transmitting a release indication. In this case, N1 or N2 SM signaling may be required before releasing the SM context. The PDU session release request transmitted by the AMF may also include an appropriate cause value. For example, the cause value may indicate that release is required due to a change in the network slice set of the UE, which is no longer available. The cause value may be REL_DUE_TO_NSI_NOT_AVAILABLE.
6-7. The SMF may transmit a PDU Session Release Command to the terminal. While transmitting the PDU Session Release Command, the SMF may request the terminal to re-establish the PDU Session. To do so, the SMF includes "Reactivation requested" in the cause included in the PDU Session Release Command, thereby causing the terminal to re-establish the PDU Session.
8. The terminal may use S-NSSAI#1 to initiate the PDU session establishment procedure in order to re-establish the PDU session. In this process, since the AMF does not have an NSI ID, the AMF may select a new NSI ID. The PDU session establishment procedure follows the examples shown in FIG. 5 and FIG. 6.

The following drawings are provided to explain specific examples of the present disclosure. The names of specific devices, signals, messages, and fields shown in the drawings are provided as examples, and the technical features of the present disclosure are not limited to the specific names used in the following drawings.

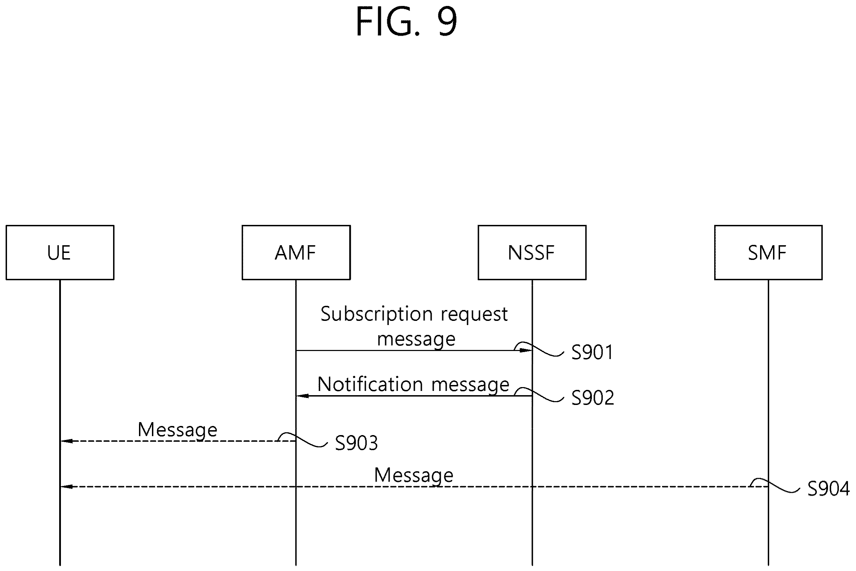

**FIG. 9** **is an example of a procedure performed according to an embodiment of the present disclosure.**

For reference, the procedure shown in FIG. 9 is merely an example, and the scope of the present disclosure is not limited by the example shown in FIG. 9.

For example, with respect to the example of FIG. 9, the operations described in the examples of FIGS. 1 to 8 may also be applied. For example, even if operations, contents, etc. are not directly described in the example of FIG. 9, operations, contents, etc. described in various examples of the present disclosure may be applied.

In step S901, the AMF may transmit a subscription request message to the NSSF. The subscription request message may be a message based on the Nnssf_NSSAIAvailability_Subscribe service operation described in various examples of the present disclosure.

The AMF may transmit a message to the NSSF to subscribe to notifications (or alerts) for network slice replacement. Alternatively, the AMF may transmit a message to the NSSF to subscribe to notifications (or alerts) when the NSI is congested or no longer available. Messages based on the Nnssf_NSSAIAvailability_Subscribe service operation may include event type information. For example, event type information may include information related to SNSSAI replacement or information related to NSI unavailability. For example, information related to SNSSAI replacement may be an SNSSAI replacement report. For example, information related to NSI unavailability may be an NSI Unavailability report.

For example, the subscription event information transmitted by AMF to NSSF may include the following information. For example, event information may include event type (e.g., NssfEventType) information. The event type (e.g., NssfEventType) describes the event that will be subscribed to through this subscription. The event type (e.g., NssfEventType) may include, for example, SNSSAI_REPLACEMENT_REPORT or NSI_UNAVAILABILITY_REPORT. SNSSAI_REPLACEMENT_REPORT is used to subscribe to events for receiving information related to S-NSSAI replacement for each affected S-NSSAI. NSI_UNAVAILABILITY_REPORT is used to subscribe to events for receiving a list of unavailable NSIs.

Based on the event type information being information related to the SNSSAI replacement, the subscription request message may include S-NSSAI information.

Based on the event type information being information related to the NSI unavailability, the subscription request message may include the NSI ID.

In step S902, the NSSF may transmit a notification (or notification) message to the AMF. For example, if the NSSF needs to notify the AMF based on the event for which the AMF requested subscription in step S901, the NSSF may send a notification message. For example, the notification message may be a message based on the Nnssf_NSSAIAvailability_Notify service operation described in various examples of the present disclosure.

For example, step S902 may correspond to step 3 in FIG. 7 or step 3 in FIG. 8.

For example, the notification message may be different based on the event type information transmitted by the AMF. For example, based on the event type information being information related to the SNSSAI replacement, the notification message may be a notification for network slice replacement. For example, based on the event type information being information related to the NSI unavailability, the notification message may be a notification that the NSI is congested or no longer available.

For example, an AMF may subscribe to notifications of NSI replacement. In this case, the AMF may subscribe to the NSSF for notifications of any of the NSIs served by the AMF becoming congested or no longer available.

For example, based on the event type information being information related to the SNSSAI replacement, the notification message may include alternative S-NSSAI information and mapping information for the S-NSSAI to be replaced.

For example, based on that the event type information is information related to the NSI unavailability, the notification message may include information on the NSI ID for which status has (or is) changed.

For reference, the following step S903 or step S904 may be performed selectively. For example, based on the event type transmitted by the AMF in step S901, one of the following steps S903 or step S904 may be performed.

In step S903, the AMF may transmit a message to the UE. For example, if the notification message includes alternative S-NSSAI information, the AMF may transmit a UE configuration update command message including the alternative S-NSSAI information to the UE.

For example, step S903 in FIG. 9 may correspond to step 4 in the example in FIG. 7. For example, after step S903 is performed, steps 5 to 12 in FIG. 7 may be performed.

In step S904, the SMF may transmit a message to the UE. For example, if the notification message includes information about the changed status of the NSI ID, the AMF may transmit a request message to the SMF to release and re-establish the PDU session. For example, the AMF may transmit a request message requesting the release of the PDU session and information that the NSI ID is unavailable to the SMF. The information that the NSI ID is unavailable may be used by the SMF to establish a new PDU session after terminating the PDU session. Then, the SMF may transmit a PDU session release command message and a cause related to the reactivation request to the UE.

For example, step S904 in FIG. 9 may correspond to step 6 in FIG. 8. For example, steps 4 to 5 in FIG. 8 may be performed before step S904 is performed. For example, steps 6 to 8 in FIG. 8 may be performed after step S904 is performed.

According to an embodiment of the present disclosure, when AMF/NSSF supports NSI ID replacement and S-NSSAI replacement, the following operations may be performed. For example, when AMF performs event subscription to NSSF, it may include event ID and filter information to be subscribed.

The present disclosure may have various effects.

For example, both NSI ID replacement and S-NSSAI replacement may be used efficiently. For example, various examples of the present disclosure may support both NSI Replacement and Network Slice Replacement through explicit subscription. Accordingly, both replacements may be supported based on the same method, and signaling generated in the network may be reduced. For example, replacement related to network slices may be performed more efficiently.

The effects obtainable through the specific examples of the present disclosure are not limited to those listed above. For example, there may be various technical effects that a person having ordinary skill in the related art may understand or derive from the present disclosure. Accordingly, the specific effects of the present disclosure are not limited to those explicitly described herein, but may include various effects that can be understood or derived from the technical features of the present disclosure.

For reference, the operation of the terminal (e.g., UE, etc.) described in the present specification may be implemented by the apparatus of FIGS. 1 to 4 described above. For example, the terminal (e.g., UE) may be the first device 100 or the second device 200 of FIG. 2. For example, an operation of a terminal (e.g., UE) described herein may be processed by one or more processors 102 or 202. The operation of the terminal described herein may be stored in one or more memories 104 or 204 in the form of an instruction/program (e.g., instruction, executable code) executable by one or more processors 102 or 202. One or more processors 102 or 202 control one or more memories 104 or 204 and one or more transceivers 105 or 206, and may perform the operation of the terminal (e.g., UE) described herein by executing instructions/programs stored in one or more memories 104 or 204.

In addition, instructions for performing an operation of a terminal (e.g., UE) described in the present disclosure of the present specification may be stored in a non-volatile computer-readable storage medium in which it is recorded. The storage medium may be included in one or more memories 104 or 204 . And, the instructions recorded in the storage medium may be executed by one or more processors 102 or 202 to perform the operation of the terminal (e.g., UE) described in the present disclosure of the present specification.

For reference, the operation of a network node (e.g., AMF, SMF, UPF, PCF, NSSF, etc.) or base station (e.g., NG-RAN, gNB, etc.) described herein may be implemented by the apparatus of FIGS. 1 to 3 to be described below. For example, a network node or a base station may be the first device 100 of FIG.2 or the second device 200 of FIG.2. For example, the operation of a network node or base station described herein may be processed by one or more processors 102 or 202. The operation of the terminal described herein may be stored in one or more memories 104 or 204 in the form of an instruction/program (e.g., instruction, executable code) executable by one or more processors 102 or 202. One or more processors 102 or 202 may perform the operation of a network node or a base station described herein, by controlling one or more memories 104 or 204 and one or more transceivers 106 or 206 and executing instructions/programs stored in one or more memories 104 or 204.

In addition, instructions for performing the operation of the network node or base station described in the present disclosure of the present specification may be stored in a non-volatile (or non-transitory) computer-readable storage medium. The storage medium may be included in one or more memories 104 or 204. And, the instructions recorded in the storage medium are executed by one or more processors 102 or 202, so that the operations of a network node or base station are performed.

In the, preferred embodiments have been exemplarily described, but the present disclosure of the present specification is not limited to such specific embodiments, and thus, modifications, changes, or may be improved.

In the exemplary system described above, the methods are described on the basis of a flowchart as a series of steps or blocks, but are not limited to the order of the steps described, some steps may occur in a different order or concurrent with other steps as described above. In addition, those skilled in the art will understand that the steps shown in the flowchart are not exclusive and that other steps may be included or that one or more steps of the flowchart may be deleted without affecting the scope of rights.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method.

## Claims

1. A method for performing communication, the method performed by an Access and Mobility Management Function (AMF) and comprising:
transmitting a subscription request message to an Network Slice Selection Function (NSSF); and
receiving a notification message from the NSSF,
wherein the subscription request message includes event type information,
wherein the event type information includes information related to a replacement of Single Network Slice Selection Assistance Information (SNSSAI) or information related to unavailability of Network Slice Instance (NSI),
based on the event type information being the information related to the replacement of the SNSSAI, the notification message is a notification for network slice replacement, and
based on the event type information being the information related to the unavailability of the NSI, the notification message is a notification that the NSI is congested or no longer available.

2. The method of claim 1,
wherein the information related to the SNSSAI replacement is an SNSSAI replacement report.

3. The method of claim 1 or 2,
wherein the information related to the NSI unavailability is an NSI Unavailability report.

4. The method of any one of claims 1 to 3,
based on the event type information being the information related to the SNSSAI replacement, the subscription request message includes S-NSSAI information.

5. The method of any one of claims 1 to 4,
based on the event type information being the information related to the NSI unavailability, the subscription request message includes an NSI ID.

6. The method of any one of claims 1 to 5,
based on the event type information being the information related to the replacement of the SNSSAI, the notification message includes alternative S-NSSAI information and mapping information for S-NSSAI to be replaced.

7. The method of any one of claims 1 to 6,
based on the event type information being the information related to the NSI unavailability, the notification message includes information related to the NSI ID for which status has changed.

8. The method of claim 6, further comprising:
transmitting, to a User Equipment (UE), a UE configuration update command message including the alternative S-NSSAI information.

9. The method of claim 7, further comprising:
transmitting a request message for requesting release of the Packet Data Unit (PDU) session and information related to that the NSI ID is unavailable to the Session Management Function (SMF), and
wherein the information related to that the NSI ID is unavailable is used to establish a new PDU session after the SMF releases the PDU session.

10. An Access and mobility Management Function (AMF) for performing communication, wherein the AMF comprising:
at least one transceiver;
at least one memory; and
at least one processor operably coupled to the at least one memory and the transceiver,
wherein the at least one processor is adapted to: perform operations of a method of any one of claims 1 to 9.

11. A method for performing communication, the method performed by a user equipment (UE) and comprising:
transmitting a non-access stratum (NAS) message including a packet data unit (PDU) session establishment request message and a first single network slice selection assistance information (S-NSSAI) to an access and mobility management function (AMF);
receiving a PDU session establishment accept message; and
receiving information related to that the first S-NSSAI needs to be replaced with the second S-NSSAI or a PDU session release command message including a cause related to a reactivation requested,
based on whether event type information subscribed by the AMF for the Network Slice Selection Function (NSSF) is information related to SNSSAI replacement or information related to NSI unavailability, the information or the release command message is received.

12. A User Equipment (UE) for performing communication, wherein the UE comprising:
at least one transceiver;
at least one memory; and
at least one processor operably coupled to the at least one memory and the transceiver,
wherein the at least one processor is adapted to: perform operations of a method of claim 11.

13. A method for performing communication, the method performed by an Network Slice Selection Function (NSSF) and comprising:
receiving a subscription request message from an Access and Mobility Management Function (AMF); and
transmitting a notification message to the AMF,
wherein the subscription request message includes event type information,
wherein the event type information includes information related to a replacement of Single Network Slice Selection Assistance Information (SNSSAI) or information related to unavailability of Network Slice Instance (NSI),
based on the event type information being the information related to the replacement of the SNSSAI, the notification message is a notification for network slice replacement, and
based on the event type information being the information related to the unavailability of the NSI, the notification message is a notification that the NSI is congested or no longer available.

14. The method of claim 13,
based on the event type information being the information related to the SNSSAI replacement, the subscription request message includes S-NSSAI information.

15. The method of claim 13 or 14,
based on the event type information being the information related to the NSI unavailability, the subscription request message includes an NSI ID.

16. The method of any one of claims 13 to 15,
based on the event type information being the information related to the replacement of the SNSSAI, the notification message includes alternative S-NSSAI information and mapping information for S-NSSAI to be replaced.

17. The method of any one of claims 13 to 16,
based on the event type information being the information related to the NSI unavailability, the notification message includes information related to the NSI ID for which status has changed.

18. An Network Slice Selection Function (NSSF) for performing communication, wherein the NSSF comprising:
at least one transceiver;
at least one memory; and
at least one processor operably coupled to the at least one memory and the transceiver,
wherein the at least one processor is adapted to: perform operations of a method of any one of claims 13 to 18.
